# EUROPEAN PATENT APPLICATION

(11) **EP 3 754 259 A1**
(43) Date of publication of application: **23.12.2020**
(21) Application number: 19020387.7
(22) Date of filing: 17.06.2019
(51) Int. Cl.: F23N 5/00

(54) **METHOD FOR OPERATING A FURNACE**

(71) Applicant: Linde GmbH, 82049 Pullach (DE)
(72) Inventor: Schemberg, Siegfried, 85256 Vierkirchen (DE)
(74) Representative: Gellner, Bernd

(57) **Abstract**

The present invention relates to a method for operating a furnace (100) with at least one burner (110) and at least one oxidant injection element (120), wherein at least one physical quantity of the furnace (100) is measured with at least one sensor (131, 132, 133, 134, 135, 136a, 136b, 137, 138, 139), wherein the measured at least one physical quantity is evaluated, and wherein at least one operating parameter for the operation of the at least one burner (110) and/or the at least one oxidant injection element (120) is determined in dependence of a result of the evaluation.

## Description

The present invention relates to a method for operating a furnace with at least one burner and at least one oxidant injection element as well as to a computing unit and to a furnace for performing this method.

### Background of the invention

Furnaces like melting and casting furnaces are used in metallurgy for melting, smelting or refining of metallic materials. Furnaces of that kind can for example be reverberatory furnaces or rotary furnaces.

A rotary furnace can for example comprise a cylindrical vessel, which can be rotated about its longitudinal axis. Burners can be provided in a furnace door through which the material to be melted can be introduced into the furnace.

In reverberatory or rotary furnaces, the metallic material to be melted is typically in direct contact with the fuel or the flame of the combustion and with the off-gas. Thermal radiation within the furnace is reflected or reverberated from the walls and the ceiling of the furnace.

Burners for these kinds of furnaces perform combustion of a fuel, e.g. natural gas, methane and/or propane, and an oxidant, usually air and/or oxygen. For this purpose, a burner usually comprises a corresponding fuel supply and an oxidant supply. Further, additional oxidant injection elements like lances can be provided in the furnace in order to add an additional amount of oxidant to the furnace.

It is desirable to operate the furnace in an optimised manner, in particular such that efficiency can be increased and that emissions can be reduced.

### Disclosure of the invention

According to the invention, a method for operating a furnace as well as a computing unit and a furnace for performing this method with the features of the independent claims are proposed. Advantageous further developments form the subject matter of the dependent claims and of the subsequent description.

The furnace comprises at least one burner and at least one oxidant injection element. At least one physical quantity of the furnace is measured with at least one sensor. The measured at least one physical quantity is evaluated and at least one operating parameter for the operation of the at least one burner and/or the at least one oxidant injection element is determined in dependence of a result of this evaluation.

The term "physical quantity of the furnace" shall particular be understood as a measureable quantity or property of the furnace itself and/or of an element or medium, which can come in contact with the furnace or which can interact with the furnace during its operation. Particularly, the at least one physical quantity can include a physical quantity or property of the furnace itself, its atmosphere, as well as the burner flames, the off-gas, the injected fuel and oxidant and the material loaded into the furnace.

Each burner particularly comprises a fuel supply to provide a fuel, e.g. natural gas, methane and/or propane. Further, each burner can expediently comprise an oxidant supply to provide an oxidant, e.g. air and/or oxygen. On the other hand, the oxidant injection element can be such an oxidant supply or can e.g. be provided as an oxidant lance in order to provide an additional amount of oxidant to the furnace. The furnace is particularly used in metallurgy for the processing or the treatment of a metallic material, e.g. for melting, smelting or refining of a metallic material. For example, the furnace can be a reverberatory furnace or a rotary furnace.

Corresponding sensors are provided at specific locations inside the furnace. The at least one physical quantity particularly corresponds to a physical property of an atmosphere inside the furnace and/or of a specific component of the furnace. The operating parameters particularly describe how to specifically operate the burner(s) and/or the oxidant injection element(s).

In the course of the evaluation of the measured physical quantity or quantities a current status of the furnace is particularly evaluated, which especially describes current conditions inside the furnace. For example, a current temperature distribution inside the furnace and/or a chemical composition of the atmosphere inside the furnace can be determined as current status of the furnace. The status of the furnace is particularly influenced by the combustion performed by the burner(s) as well as by the processing of the material inside the furnace. For example, when the material inside the furnace begins to melt or when new cold material to be melted is added to an already hot furnace, the current properties of the furnace and thus the current status of the furnace are specifically influenced. Further, different materials to be processed influence the furnace properties and status in a different specific manner.

Therefore, according to the present method, the furnace, in particular the burner(s) and/or the oxidant injection element(s) are operated in dependence of the current status of the furnace, i.e. in dependence of current physical properties inside the furnace. The furnace is thus not operated in a fixed manner, i.e. not with constant operating parameters throughout the entire treatment of the material inside the furnace. According to the present method, the operating parameters can dynamically be adjusted throughout the entire treatment process and can be adapted according to the current conditions inside the furnace. Thus, an optimum operation of the furnace, in particular an optimum combustion and an optimum material treatment can be performed. Efficiency can be increased and emissions can be reduced.

The present invention therefore provides a possibility to use several sensors and to combine their measurements in a real time furnace operation analysis tool to improve the heating and combustion process in order to increase the furnace performance and to lower the furnace emissions, in particular CO and NOx emissions. The furnace operation can be optimised in terms of burner firing rate, heat distribution inside the furnace and furnace emissions. Operating parameters like burner firing rates and heat distribution inside the furnace can be controlled and adjusted in dependence of the specific phase of the material processing or treatment.

Productivity of the furnace can be increased and thus a higher melting rate and lower energy consumption can be achieved. Lower energy consumption furthermore yields less CO2 emissions. Further, CO emissions can be reduced, especially by adding oxygen and/or by adjusting the burner stoichiometry. NOx emissions can be reduced because of lower flame temperatures. The air fuel burner flame can be expanded by using the at least one oxidant injection element, e.g. in the form of oxygen lances. Improved energy and heat distribution can be provided inside the furnace. Higher burner firing rates are possible when combustion air is partially replaced by oxygen. A lower off-gas volume can be achieved. Efficiency of an air preheat system can be increased due to lower air and off-gas volume, which means a relative volume or surface area of regenerative or recuperative air preheat systems can be decreased.

Further, the invention provides a possibility such that the furnace can be operated fully automated by itself, ensuring a highly efficient way of operation. The present method is particularly suitable for a wide range of melting and heating furnaces. Already existing furnaces can easily be upgraded in order to perform a method according to the present invention.

Further, the at least one operating parameter for the operation of the at least one burner and/or the at least one oxidant injection element can particularly be determined in consideration of historic data and algorithm based on those data. This historic data can particularly describe how the furnace was operated in the past, particularly with which operating parameter the burner(s) and/or one oxidant injection element(s) were operated in the past. By means of the corresponding algorithm, the historic data can expediently be evaluated e.g. in order to predict how behaviour of the furnace changes when specific operating parameters are changed or when the furnace status or furnace conditions change. This historic data can thus particularly be used to further evaluate the behaviour of the furnace, for example in order to determine how the performance of the furnace changes over its lifetime or in order to predict how the furnace reacts to different operating scenarios.

According to a particularly preferred embodiment, temperatures at specific locations of the furnace are measured as the at least one physical quantity. By means of these different temperatures the heat distribution inside the furnace can be evaluated. The operating parameters can therefore be determined such that an improved heat distribution inside the furnace can be achieved.

Alternatively or additionally, amounts of specific chemical compounds in an atmosphere of the furnace are measured as the at least one physical quantity according to a particularly preferred embodiment. Thus, the atmosphere inside the furnace can be evaluated for specific emission compounds, which shall be reduced, like CO or NOx. The operating parameters can particularly be determined in order to reduce these compounds. Further, amounts of natural gas, air and oxygen can expediently be measured, especially in order to fulfil requirements regarding a safe burner operation. Requirements of that kind in an SIL level are e.g. defined in the norms EN 746-2 or ISO 13577-2.

Advantageously, at least one temperature inside the furnace is measured as the at least one physical quantity. Thus, the temperature at specific locations inside the atmosphere, especially the temperature of the furnace atmosphere at these specific locations can be measured and evaluated, particularly in order to precisely determine the heat distribution inside the furnace. Further, a flame temperature of the burner combustion flame can be measured.

Alternatively or additionally, at least one temperature of a roof of the furnace is preferably measured as the at least one physical quantity. For this purpose at least one sensor is provided at a specific location of the furnace roof or close to the roof. The firing rate of the burner(s) can especially be determined in dependence of the furnace roof temperature and can particularly be reduced, when the roof temperature approaches a maximum allowed roof temperature.

Alternatively or additionally, at least one temperature of an off-gas of the furnace is advantageously measured as the at least one physical quantity. For this purpose, at least one sensor can be arranged in an exhaust flue of the furnace through which the off-gas is ejected from the furnace.

Preferably, an amount of CO in an off-gas and/or an amount of NOx in the off-gas and/or an amount of O2 in the off-gas are measured as the at least one physical quantity. For this purpose, corresponding sensors can be provided in the exhaust flue of the furnace. Since an oxygen demand inside the furnace can be higher when organic contaminated scrap is charged, additional oxygen can be added by means of the oxidant injection element(s) in dependence of the measured CO and/or O2 amounts in the off-gas. In such cases the heat of combustion is used inside the furnace and lowers the specific energy consumption.

Advantageously, a firing rate and/or a stoichiometric set-point and/or a ratio of air and oxygen are determined as the at least one operating parameter. These operating parameters are particularly determined such that low CO and/or NOx emissions are produced and especially such that a uniform heat distribution can be provided inside the furnace. By adjusting the air/oxygen ratio the heat distribution inside the furnace can particularly be controlled, especially in order to put more heat into colder sections of the furnace.

Melting inside the furnace can be performed as a batch process, wherein the furnace is charged several times with cold scrap. When cold scrap is charged, the cold material can pick up more heat compared to a flat bath of molten metal. Thus, the firing rate at the beginning of the furnace operation can particularly be adjusted rather high and can be continuously reduced when the metallic material is liquid and when the furnace is hot.

Behaviour of the burner(s) particularly depends on proper mixing of fuel and oxidant in order to achieve a complete combustion. In a cold furnace this is easier to achieve than in a heated furnace at high temperature, because viscosity and density of gases are changing with temperature. Therefore, the mixing ratio of fuel and oxidant, i.e. the stoichiometric set-point, is particularly adjusted accordingly throughout the melting process, in particular to keep emission during the entire melting process constantly low.

Preferably, the at least one operating parameter is determined such that a heat distribution inside the furnace is controlled, in particular such that more heat is put into colder sections of the furnace. Thus, an improved energy and heat distribution can be achieved inside the furnace. Alternatively or additionally, the at least one operating parameter is preferably determined such that a CO emission and/or a NOx emission is reduced. This can particularly be achieved by adding additional oxygen into the furnace via the at least one oxidant injection element and/or by adjusting the stoichiometric set-point of the at least one burner.

According to an advantageous embodiment, the measured at least one physical quantity and/or the result of the evaluation of the measured at least one physical quantity and/or the determined at least one operating parameter are stored as historic data, e.g. in a data registration system. This stored historic data can be used to further evaluate the behaviour of the furnace, for example in order to determine how the performance of the furnace changes over its lifetime or in order to predict how the furnace reacts to different operating scenarios, e.g. to the treatment of different materials. Particularly, the historic data can be evaluated in order to predict how behaviour of the furnace changes when specific operating parameters are changed or when the furnace status or furnace conditions change. Thus, the performance of the furnace can further be optimised, productivity can further be increased, and emissions can further be reduced.

Preferably, a mathematical and/or statistical analysis of the stored historic data is performed. Particularly, mathematical and/or statistical algorithms can be created in order to predict behaviour of the furnace, especially to predict changes of the behaviour in dependence of changing operating parameters or a changing furnace status. By means of this analysis, after a learning phase behaviour of the furnace can expediently be predicted.

Advantageously, the at least one operating parameter is determined in dependence of a result of the mathematical and/or statistical analysis of the stored historic data. Thus, the operating parameters are determined in dependence of the current measured physical quantities inside the furnace and further particularly in dependence of the knowledge of how the furnace reacts to the modification of the corresponding operating parameters, expediently in dependence of the created algorithms. Thus, it can further be provided that performance and productivity can be improved and that emissions can be reduced in a desired manner.

The present invention further relates to a computing unit which is, in particular by means of a computer program, configured to carry out an inventive method, i.e. comprises all means for carrying out the invention. This computing unit can for example be provided as a control unit of a corresponding furnace.

A furnace according to the invention is configured to carry out an inventive method, i.e. comprises all means for carrying out the invention. For this purpose, the furnace comprises a corresponding amount of sensors and particularly a computing unit according to the invention.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings
- Fig. 1: schematically shows a preferred embodiment of a furnace according to the present invention in a sectional top view and
- Fig. 2: schematically shows a preferred embodiment of a method according to the present invention as a block diagram.

### Detailed description of the figures

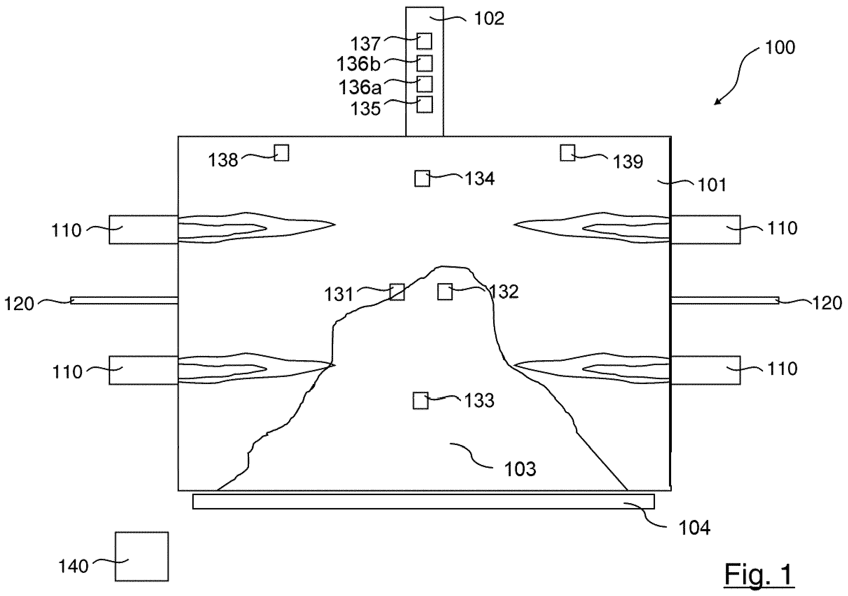

Fig. 1 schematically shows a preferred embodiment of a furnace 100 according to the present invention in a sectional top view.

In the present example, the furnace 100 is a reverberatory furnace. However, the furnace 100 could also be of a different kind, for example a rotary furnace or the like.

The furnace 100 comprises a chamber 101 in which a metallic material 103 to be melted can be charged through a door opening 104. An exhaust flue 102 is provided for exhausting an off-gas from the chamber 101.

Further, at least one burner 110 is provided. In the present example four burners 110 are provided. However, also a different number of burners can be provided, e.g. only one burner or two burners etc. Each burner 110 expediently comprises a fuel supply for providing a fuel, e.g. natural gas, methane or propane. Additionally, each burner 110 can comprise an oxidant supply for providing an oxidant, e.g. oxygen. Each burner 110 can perform combustion of the accordingly provided fuel and oxidant.

Further, at least one oxidant injection element 120 is provided e.g. as an oxidant lance. By means of these oxidant injection elements 120 an additional amount of oxidant, e.g. oxygen, can be provided to the furnace 100. Although two oxidant injection elements 120 are shown in Fig. 1, it is to be understood that also a different number of oxidant injection elements 120 can be provided.

Furthermore, at least one sensor is provided in order to measure a physical quantity of the furnace 100. In the present example nine sensors 131 to 139 are provided. For example, the sensors 131 to 134 are provided to measure temperatures at four different locations inside the furnace 100. The sensor 135 is provided to measure an amount of O2 in the off-gas in the exhaust flue 102, sensor 136a to measure an amount of CO in the off-gas and sensor 136b to measure an amount of NOx in the off-gas. Sensor 137 measures the temperature of the off-gas in the flue 102. Each of the sensors 138 and 139 is provided to measure a temperature of the roof of the furnace.

Corresponding sensor data, i.e. the corresponding measured physical quantity, is transferred from the corresponding sensors 131 to 139 to a control unit 140. This control unit 140 is further provided for operating the furnace 100, in particular to operate and control the burners 110 and the oxidant lances 120.

For sake of clarity of illustration, the lines connecting the sensors 131 to 139 with the control unit 140, on the one hand, and the lines connecting the control unit 140 with the means for operating the furnace 100, on the other hand, are not shown, especially as such lines can be replaced by wireless connections.

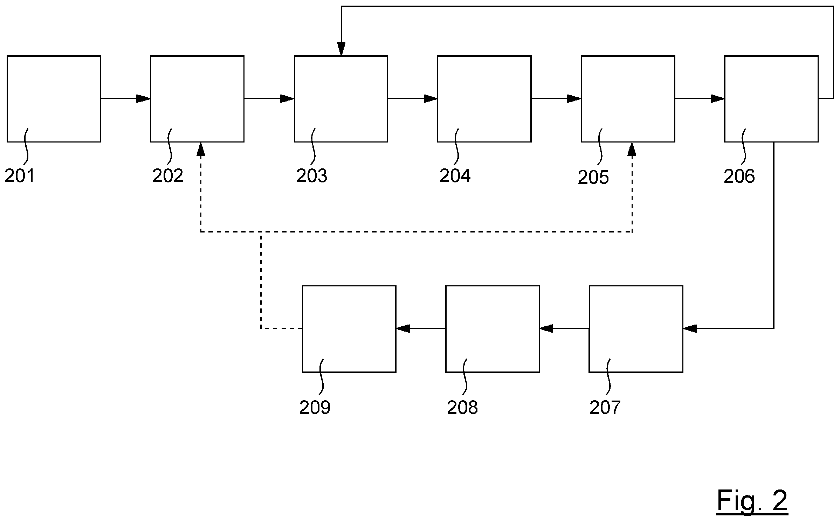

For this purpose, the control unit 140 is adapted to perform a preferred embodiment of a method according to the invention, which is schematically shown in Fig. 2 as a block diagram.

In step 201 the furnace 100 is charged with the metallic material 103 to be melted and in step 202 the burners 110 and oxidant lances 120 are activated in order to perform combustion of fuel and oxidant. For this purpose the burners 110 and lances 120 are operated with initial operating parameters, expediently with an initial firing rate, an initial stoichiometric set-point and an initial ratio of air and oxygen.

These initial operating parameters can be predetermined or can be determined at each start of the furnace 100 based on a predicted behaviour of the furnace 100 by the control unit 140, as will be explained later.

In step 203 physical quantities of the furnace 100 are measured with the sensors 131 to 139. In particular, the corresponding temperatures in the furnace 100 are measured with the sensors 131, 132, 133, 134, 137, 138, and 139 and the amounts of 02, CO and NOx in the off-gas are measured with the sensors 135, 136a and 136b.

In step 204 these measured physical quantities are evaluated, particularly in order to determine a current status or current conditions inside the furnace 100, expediently a temperature distribution inside the furnace 100 as well as a chemical composition of the atmosphere inside the furnace 100.

In step 205 the operating parameter are determined in dependence of the result of this evaluation, considering the learnings from historical data and evaluated algorithm, as will be described later, and in step 206 the burners 110 and the oxidant injection elements 120 are operated according to these determined operating parameters.

The steps 203 to 206 can continuously be repeated during the operation of the furnace, i.e. throughout the entire melting process the burner firing rate, the stoichiometric set-point, and the air/oxygen ratio are adjusted depending upon the actual status of the furnace 100. Therefore, an automated procedure is provided which optimises the furnace operation in terms of burner firing rate, heat distribution and emissions.

Particularly, the burner firing rate and the heat distribution inside the furnace 100 can be controlled and adjusted in dependence of the to current specific phase of the melting process. For example, the firing rate can be adjusted in dependence of the furnace roof temperature and can expediently be reduced when the roof temperature approaches a maximum allowed temperature. The air/oxygen ratio can e.g. be adjusted in order to control the heat distribution inside the furnace and to put more heat into colder sections of the furnace 100.

It is also possible that the furnace 100 is re-charged several times with new cold material to be melted. When new material is charged, this cold material can pick up more heat compared to a flat bath of molten metal. Thus, the firing rate is adjusted higher when new cold material is charged and is continuously reduced when the material is liquid and furnace 100 is hot.

Further, oxygen demand inside the furnace 100 can be higher, when contaminated scrap is charged. Thus, depending on the measured CO and O2, additional oxygen can be added via the oxidant injection elements 120 in order to reduce CO emissions when organic contaminated scrap is charged. In these cases the heat of combustion is used inside the furnace and the specific energy consumption is reduced.

The air fuel burner behaviour depends upon proper mixing of fuel and oxidant to achieve a complete combustion. In a cold furnace this is easier to achieve than in a heated furnace at high temperature, because viscosity and density of gases are changing with temperature. This leads to higher CO emissions at the end of a melting phase. Thus, the stoichiometric set-point is for example adjusted in dependence of the measured amount of CO. By adjusting the stoichiometric set-point to an optimum value, which is calculated by the control unit 140 as described later, the NOx emissions can also be reduced.

Furthermore, the measured, evaluated and determined data can be collected and analysed to predict after a learning phase the furnace behaviour for any status or change of operating parameters.

For this purpose in step 207 the measured physical quantities, the result of the evaluation, i.e. the current status of the furnace, as well as the determined operating parameters are stored as historic data. These historic data can for example be stored in the control unit 140 itself or also in separate computing unit or data storage unit, e.g. in a data registration system.

In step 208, a mathematical and/or statistical analysis of the stored historic data is performed. This analysis can be performed by the control unit 140 or also by a different computing unit. Further, this analysis can be performed online during the operation of the furnace 100 or also at a later time when the furnace is offline. By means of this mathematical/statistical analysis, in step 209 behaviour of the furnace can be learned.

In step 209, as a result of this analysis, mathematical/statistical algorithms are created in order to predict behaviour of the furnace, especially to predict changes of the behaviour in dependence of changing operating parameters and a changing furnace status.

This predicted behaviour, i.e. the created algorithms can be used to determine the operating parameter for the burners 110 and the oxidant injection elements 120. In particular, the initial parameters can be predetermined at each start of the furnace 100 in dependence these algorithms, as explained above in step 202.

Furthermore, in step 205 the operating parameters can be determined in dependence of the current measured physical quantities as well as in dependence of these algorithms, i.e. based on the knowledge of how the furnace 100 reacts to the modification of the corresponding operating parameters. Performance and productivity of the furnace can thus be improved and emissions can be reduced.

### Reference list

- 100: furnace
- 101: chamber
- 102: exhaust flue
- 103: metallic material
- 104: furnace door
- 110: burner
- 120: oxidant injection element
- 131: sensor
- 132: sensor
- 133: sensor
- 134: sensor
- 135: sensor
- 136a: sensor
- 136b: sensor
- 137: sensor
- 138: sensor
- 139: sensor
- 140: control unit
- 201 to 209: method steps

## Claims

1. A method for operating a furnace (100) with at least one burner (110) and at least one oxidant injection element (120),
wherein at least one physical quantity of the furnace (100) is measured (203) with at least one sensor (131, 132, 133, 134, 135, 136a, 136b, 137, 138, 139),
wherein the measured at least one physical quantity is evaluated (204), and
wherein at least one operating parameter for the operation of the at least one burner (110) and/or the at least one oxidant injection element (120) is determined (205) in dependence of a result of the evaluation (204).

2. The method according to claim 1, wherein temperatures at specific locations of the furnace (100) and/or amounts of specific chemical compounds in an atmosphere of the furnace (100) are measured (203) as the at least one physical quantity.

3. The method according to claim 1 or 2, wherein at least one temperature inside the furnace (100) and/or at least one temperature of a roof of the furnace (100) and/or at least one temperature of an off-gas of the furnace (100) are measured (203) as the at least one physical quantity.

4. The method according to any one of the preceding claims, wherein an amount of CO in an off-gas of the furnace (100) and/or an amount of NOx in the off-gas of the furnace (100) and/or an amount of O2 in the off-gas of the furnace (100) are measured (203) as the at least one physical quantity.

5. The method according to any one of the preceding claims, wherein a firing rate and/or a stoichiometric set-point and/or a ratio of air and oxygen are determined (205) as the at least one operating parameter.

6. The method according to any one of the preceding claims, wherein the at least one operating parameter (205) is determined such that a heat distribution inside the furnace (100) is controlled, in particular such that more heat is put into colder sections of the furnace, and/or such that a CO emission and/or a NOx emission is reduced, particularly by adding additional oxygen into the furnace (100) via the at least one oxidant injection element (120) and/or by adjusting the stoichiometric set-point of the at least one burner (110).

7. The method according to any one of the preceding claims, wherein the measured at least one physical quantity and/or the result of the evaluation of the measured at least one physical quantity and/or the determined at least one operating parameter are stored (207) as historic data.

8. The method according to claim 7, wherein a mathematical and/or statistical analysis of the stored historic data is performed (208).

9. The method according to claim 8, wherein the at least one operating parameter is determined (205) in dependence of a result of the mathematical and/or statistical analysis of the stored historic data.

10. Computing unit (140) which is, in particular by means of a computer program, configured to perform a method according to any one of the preceding claims.

11. A furnace (100) with at least one burner (110) and at least one oxidant injection element (120), configured to perform a method according to any one of the preceding claims.
